# EUROPÄISCHE PATENTSCHRIFT

(11) **EP 0 931 872 B1**
(45) Veröffentlichungstag und Bekanntmachung des Hinweises auf die Patenterteilung: **09.04.2003**
(21) Anmeldenummer: 98123551.8
(22) Anmeldetag: 09.12.1998
(51) Int. Cl.: D21B 1/32, D21F 1/70, D21D 5/02

(54) **Verfahren zur Entfernung von feinen Verunreinigungen aus einer Faserstoffsuspension**
Process for removing fine contaminants from a fibre suspension
Procédé pour l'enlèvement d'impurités fines d'une suspension de fibres

(30) Priorität: 23.01.1998 DE 19802494; 18.02.1998 DE 19806732
(43) Veröffentlichungstag der Anmeldung: 28.07.1999
(73) Patentinhaber: Voith Paper Patent GmbH, 89522 Heidenheim (DE)
(72) Erfinder: Kemper, Martin, 88250 Weingarten (DE); Wiese, Horst, 86956 Schongau (DE)

(56) Entgegenhaltungen:
- WO-A-96/16222
- US-A- 4 780 179
- US-A- 5 580 446
- RIENECKER R: "Sortierung von Altpapierstoff zur Herstellung von graphischen Papieren" WOCHENBLATT FÜR PAPIERFABRIKATION, Nr. 23, 1997, Seiten 1149-1159, XP002074462

## Beschreibung

Die Erfindung betrifft ein Verfahren zur Entfernung von feinen Verunreinigungen aus einer Faserstoffsuspension gemäß dem Oberbegriff des Anspruchs 1.

Bekanntlich enthalten Faserstoffsuspensionen, insbesondere solche, die aus Altpapier gewonnen worden sind und zur Papiererzeugung eingesetzt werden sollen, eine mehr oder weniger große Menge von unerwünschten Begleitstoffen, sogenannten Störstoffen, die in der Aufbereitungsanlage entfernt werden müssen. Die Entfernung von Störstoffen wird zumeist in verschiedenen Schritten durchgeführt, da eine Stoffreinigung in einem einzigen Verfahrensschritt fast nie gelingt. Als besonders wirksam zur Entfernung von feinen Verunreinigungen haben sich Naßsiebverfahren erwiesen. Bei diesen wird die Suspension in eine Siebvorrichtung geführt und in mindestens zwei Fraktionen aufgeteilt, und zwar eine Gutstoff-Fraktion, also in die Stoffe, die das Sieb passiert haben, und eine Rejekt-Fraktion, das sind die Stoffe, die aufgrund ihrer Größe abgewiesen wurden. Allgemein hat sich in der Fachsprache des Papiermachers eingeführt, solche Naßsiebvorgänge als Sortierung zu bezeichnen. Es ist auch bekannt, die abgewiesenen Stoffe, also die Rejekt-Fraktion, einer oder mehreren weiteren nachgeschalteten Siebstufen zuzuführen. Man spricht in solchen Fällen von einer mehrstufigen Sortierung. Mehrstufige Sortierung kann an verschiedenen Stellen der Papierfaserstoffaufbereitung durchgeführt werden, wobei im allgemeinen gilt, daß, je später diese im Verfahrensablauf erfolgt, umso feiner die dabei verwendeten Sieböffnungen gewählt werden können. Beispiele zur mehrstufigen Naßsiebung der hier betrachteten Art zeigt der Fachaufsatz "Sortierung von Altpapierstoff zur Herstellung von graphischen Papieren" von R. Rienecker aus dem Wochenblatt für Papierfabrikation Nr. 23/24, 1997, Seiten 1149 bis 1159.

Aus der US 4,780,179 ist ein Verfahren bekannt, bei dem mit einer größeren Anzahl von Aufbereitungsschritten eine Altpapiersuspension von Störstoffen gereinigt werden soll. Das bekannte Verfahren wird so durchgeführt, daß zunächst bevorzugt die größeren Störstoffe und danach insbesondere die Farbpartikel entfernt werden. Dabei wird unter anderem auch eine mehrstufige Naßsiebung durchgeführt ("several stages of screens and cleaners"), wobei in einem ersten Beispiel die Angabe gemacht wird, daß der Rejekt der stromaufwärtigen Sortierstufe in den Einlauf der stromabwärtigen Sortierstufe gelangen soll. Diese bekannte Schaltungsart von Drucksortierem und Hydrozyklonen bringt zwar eine Verbesserung des Reinigungsergebnisses. Dennoch reicht der erzielte Effekt nicht immer aus, besonders wenn feine Verunreinigungen ausgeschieden werden sollen.

Auch bei dem in der WO 96/16222 A gezeigten Verfahren werden Drucksortierer eingesetzt, die also eine Naßsiebung der Suspension durchführen können. Das dort vorgestellte Verfahren ist im wesentlichen darauf gerichtet, vor der quantitativen Abscheidung von Störstoffen, insbesondere den Farbpartikeln, eine intensive Faser-Faser-Reibung durchzuführen. Nach Verdünnung des so behandelten Faserstoffs wird zunächst in Zentrifugal-Cleanem eine Schwerteilabscheidung vorgenommen. Es schließen sich eine Grob- und dann eine Feinsortierung an, wobei der Gutstoff der Grobsortierung in die Feinsortierung geführt wird. Möglicherweise ist wegen der intensiven Vorbereitung durch das Kneten kein größerer Aufwand bei der Naßsiebung mehr erforderlich. Es ist aber auch denkbar, daß ein störender Anteil von feinen Verunreinigungen durch dieses Verfahren nicht ausgeschieden wird.

Aus der US 5,580,446 ist ein weiteres Verfahren zur Entfemung von Störstoffen aus Altpapiersuspension bekannt. Bei dem dort beschriebenen Beispiel wird der im Stofflöser aufgelöste Stoff zunächst durch ein Sieb geführt, dessen Löcher einen Durchmesser von ca. 1,3 mm habe und anschließend weiter gereinigt. Dazu werden Kombinationsapparate verwendet, die nacheinander eine Flotation und dann eine Naßsiebung durchführen. D.h. der Gutstoff der Flotation gelangt in den Sortierbereich, während der Flotationsschaum und der Siebüberlauf als zunächst gemeinsamer Rejekt abgeführt werden. Danach erfolgt eine Schaumabtrennung. Der so vom Schaum befreite Rejekt kann erneut in eine solche Kombinationsmaschine geführt werden. Der bei diesem Versuch festgestellte Effekt wurde auf die Kombination von Flotation und Siebung zurückgeführt. Das Verfahren ist sehr aufwendig, insbesondere dann, wenn die Flotationsstufen optimal arbeiten, also die Möglichkeiten einer Flotation von feinen Verunreinigungen voll ausschöpfen sollen.

Obwohl also bereits eine Vielzahl von verschiedenen Systemschaltungen zur Reinigung von Papierfaserstoffsuspensionen bekannt sind und angewendet werden, gelingt es nicht immer, sämtliche störenden Verunreinigungen aus der Suspension zu entfernen. Insbesondere sehr feine, klebende Verunreinigungen, welche oft auch in kleinen Mengen große Schwierigkeiten bei der Erzeugung von Papier machen, können - wenn überhaupt - nur mit großem Aufwand entfernt werden.

Der Erfindung liegt die Aufgabe zugrunde, ein Verfahren zu schaffen, mit dem eine besonders gute Entfemung feiner Verunreinigungen möglich ist und gleichzeitig der erforderliche verfahrenstechnische Aufwand akzeptabel bleibt.

Diese Aufgabe wird durch die im Kennzeichen des Anspruchs 1 genannten Merkmale in vollem Umfang gelöst.

Vorteilhafte Ausführungsformen sind den Ansprüchen 2-20 zu entnehmen.

Bei der hier betrachteten mehrstufigen Naßsiebung werden die Rejekte der vorhergehenden Sortierstufe in den Einlauf der nachfolgenden Sortierstufe eingeführt. Dabei kann man davon ausgehen, daß die Gutstoffqualität unterschiedlich ist, je nach dem, ob es sich um die erste, zweite oder folgende Stufe handelt. Und zwar nimmt im allgemeinen die Schmutzfracht der Gutstoffe von Stufe zu Stufe zu. Bei allen Bemühungen, eine möglichst gute Trennschärfe von Sortiervorrichtungen zu erzielen, muß man bei technischen Vorgängen davon ausgehen, daß ein gewisser - wenn auch möglichst geringer - Anteil von den auszusortierenden Störstoffen in den Gutstoff gelangt. Wegen des bereits erwähnten Anstieges der Schmutzfracht von Stufe zu Stufe enthält im allgemeinen der Gutstoff der letzten Stufe den vergleichsweise höchsten Störstoffanteil. Das trifft besonders bei den Störstoffen zu, die sehr fein sind oder nicht sehr formstabil und daher bei der Naßsiebung leichter in den Gutstoff gelangen können. In Sonderfällen kann auch die Schmutzfracht im Gutstoff der nicht zur letzten Stufe gehörenden Sortiervorrichtung die höchste sein. Darauf wird noch näher eingegangen Durch das erfindungsgemäße Verfahren ist ein besonders wirtschaftlicher Weg gefunden worden, solche feinen Störstoffe quantitativ auszuscheiden. Dabei wird nämlich ausgenutzt, daß die Gutstoffmenge in der Regel von Stufe zu Stufe ab und der Anteil an Störstoffen zunimmt. Gerade die erwähnten feinen Störstoffe, bei denen also die Entfernung durch Naßsiebung nicht immer vollständig gelingt, lassen sich durch ein Flotationsverfahren besonders effektiv ausscheiden, sofern sie hydrophob sind. Dazu gehören besonders die schon erwähnten Kleber (stickies). Dabei wird ein Flotationsverfahren angewendet, welches selektiv arbeitet, also die hydrophilen Fasern im Gutstoff beläßt und lediglich die Störstoffe im Flotationsschaum aufkonzentriert. Solche selektiven Flotationsverfahren sind weithin bekannt, müssen hier also nicht beschrieben werden. Zweckmäßigerweise wird die Suspension vor der eigentlichen Flotation so vorbereitet, daß ein möglichst großer Anteil der darin enthaltenen Störstoffe flotierbar ist. Solch eine Vorbereitung kann mechanisch oder chemisch erfolgen. Es ist z.B. möglich und zweckmäßig, mit chemischen Mitteln die Oberflächen-Aktivität der auszuflotierenden Stoffe zu erhöhen, um ihre Hydrophobie zu verstärken.

Die Erfindung und ihre Vorteile werden erläutert anhand von Zeichnungen. Dabei zeigen:
- Fig. 1: ein grundsätzliches Verfahrensschema zur Durchführung des Verfahrens;
- Fig. 2 bis 7: je eine Variante des Verfahrens.

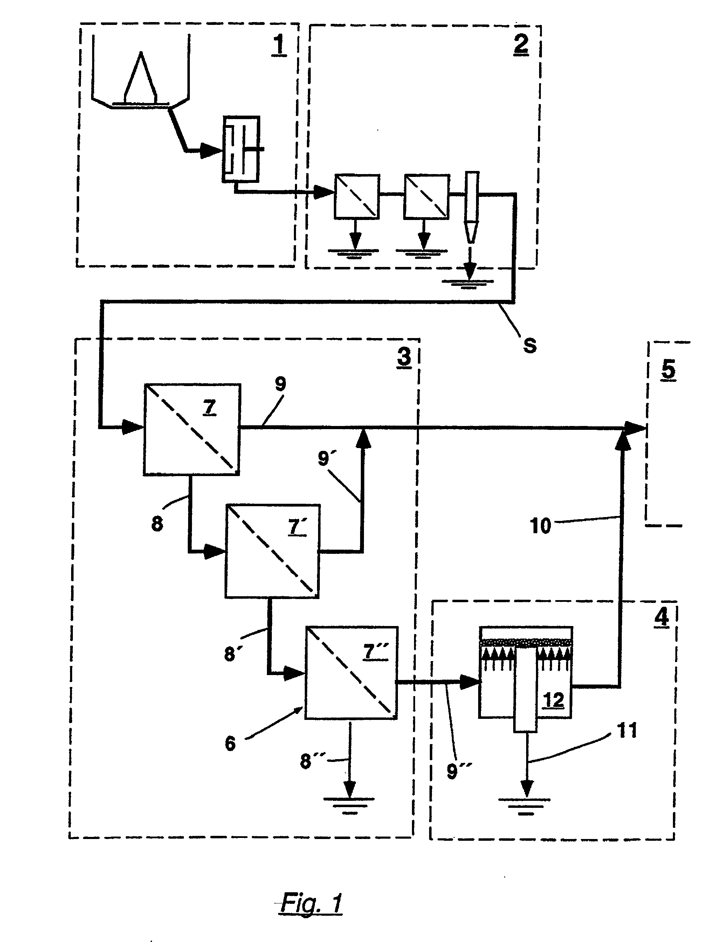

In Fig. 1 sieht man die Aufteilung des Verfahrens in die Einzelschritte: Auflösung 1, Vorreinigung 2, Naßsiebung 3, Flotationsschritt 4 und Weiterverarbeitung 5. Bekanntlich wird bei der Auflösung der zu verarbeitende Papierfaserstoff mit Wasser vermischt und so weit zerkleinert, daß eine pumpfähige, eventuell auch stippenfreie Suspension entsteht. Zumeist wird auch frühzeitig die Vorreinigung 2 durchgeführt, z.B. mit Hilfe von Hydrozyklonen oder Grobstoff-Sortierern. Es kann aber auch schon hier eine Entfernung von Druckfarben, das sogenannte Deinking, vorgenommen werden. Auch die Auflösung kann an dieser Stelle des Prozesses weit fortgeschritten sein. Der Stoff kann mit Vorteil entstippt oder dispergiert und damit für die Naßsiebung optimal vorbereitet sein. Auflösung 1 und Vorreinigung 2 sind zumeist nicht getrennt, wie hier vereinfacht dargestellt, sondern finden in Teilschritten und abwechselnd statt.

Nach Durchführung dieser beiden Verfahrensschritte gelangt die Suspension S in die mehrstufige Naßsiebung 3. Diese enthält in dem dargestellten Beispiel drei Sortiervorrichtungen 7, 7', 7". In den Sortiervorrichtungen befindet sich mindestens ein Sieb, welches die einströmende Suspension S in die Gutstoff-Fraktion 9 bzw. 9' bzw. 9" und die Rejekt-Fraktion 8 bzw. 8' bzw. 8" aufteilt. Dabei sind die Sortiervorrichtungen so geschaltet, daß die folgende Stufe jeweils die Rejekt-Fraktion der vorgeschalteten Stufe aufnimmt. Die hier gezeigte Naßsiebung 3 ist dreistufig. Dabei wird die Gutstoff -Fraktion 9" der letzten Stufe 6 in einem Flotationsschritt 4 behandelt, wozu eine Flotationszelle 12 dient. Die feinen Störstoffe werden möglichst vollständig in der Rejekt-Fraktion 11 abgeführt, und die gereinigte Faserstoffsuspension gelangt als Gutstoff-Fraktion 10 zusammen mit den übrigen Gutstoff-Fraktionen 9, 9' in die Weiterverarbeitung 5.

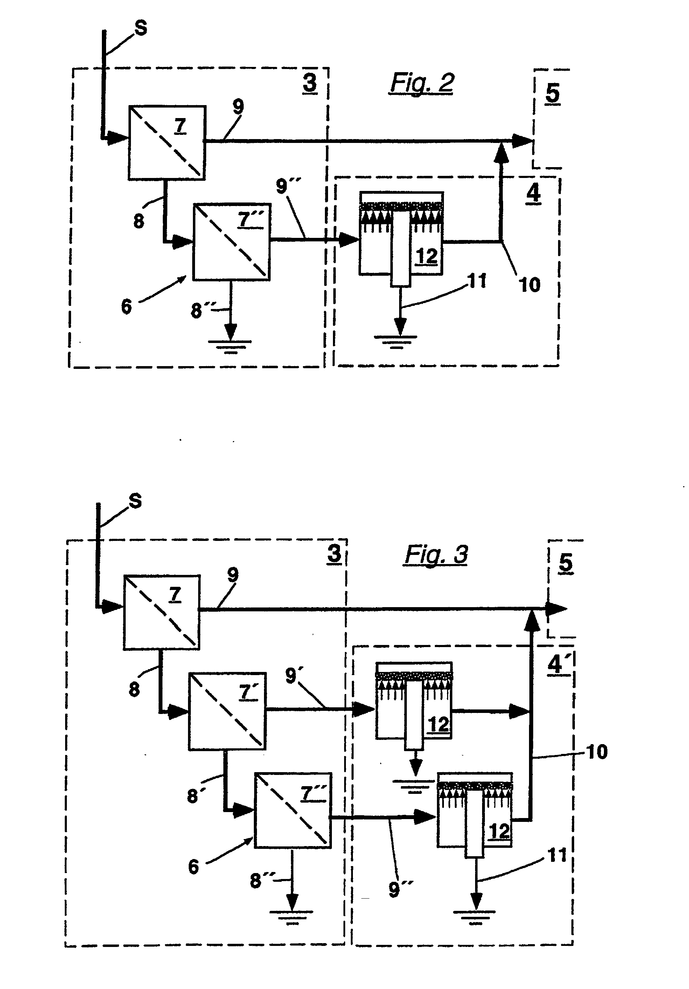

Das hier gewählte Beispiel einer dreistufigen Naßsiebung dürfte in vielen Fällen das technisch- wirtschaftliche Optimum sein. Es sind aber auch andere Fälle denkbar, bei denen z.B. zwei Stufen ausreichen, wie in Fig. 2 gezeigt, oder mehr als drei Stufen gewählt werden. Das hängt selbstverständlich von den Verhältnissen und Anforderungen ab.

Es ist auch ohne weiteres denkbar, die vorletzte Stufe mit einem Rotationsschritt zu kombinieren. Dadurch kann in den Fällen, in denen in der vorletzten Stufe bereits zu große Störstoffmengen im Gutstoff enthalten sind, das Verfahren verbessert werden. Eine solche Variante zeigt Fig. 3. In besonderen Fällen, bei denen die letzte Stufe 6 so ausgeführt ist (z.B. durch sehr feine Sieböffnungen), daß dort nur relativ wenig Störstoffe in die Gutstoff-Fraktion gelangen, könnte sogar die Flotation der Gutstoff-Fraktion der vorletzten Stufe allein schon ausreichen.

Man könnte auch die Gutstoff-Fraktion 9' der zweiten Stufe, also der Sortiervorrichtung 7', zusammen mit der Gutstoff-Fraktion 9" der letzten Stufe 6 in die Flotationszelle 12 führen und diese entsprechend größer auslegen.

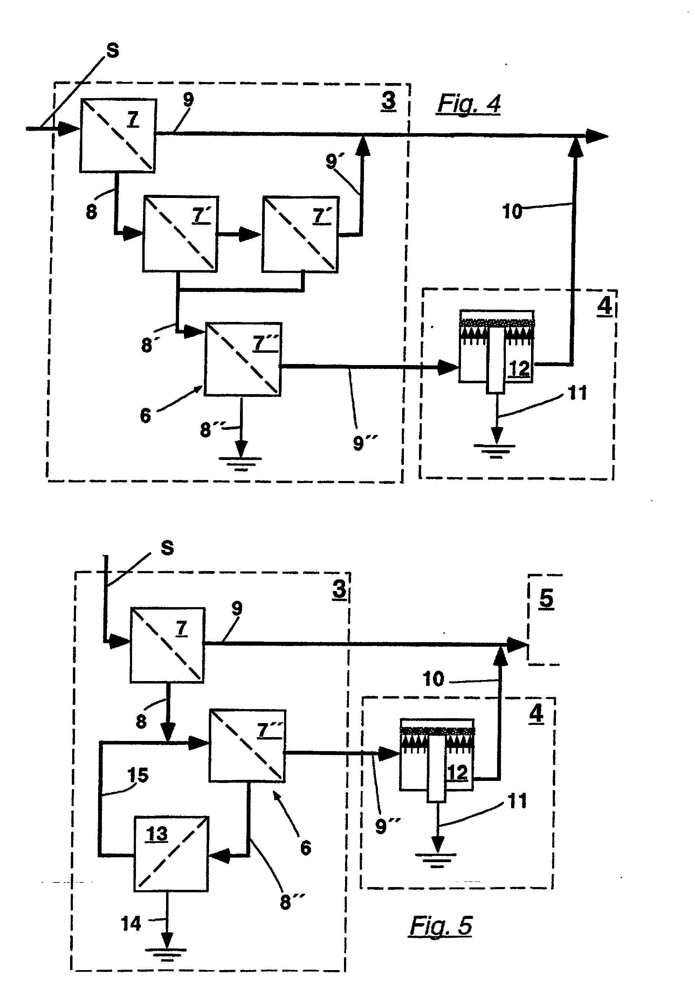

Bei der Ausgestaltung gemäß Fig. 4 werden besondere Maßnahmen unternommen, um den Gutstoff der zweiten Stufe zu verbessern. Dazu werden zwei Sortiervorrichtungen 7' bezüglich der Gutstoffe hintereinandergeschaltet und die zusammengefaßten Rejekte 8' in die Sortiervorrichtung 7" der letzten Stufe 6 zugeführt. Die Gutstoff-Fraktion 9' der zweiten Stufe kann auf diese Weise qualitativ der Gutstoff-Fraktion 9 aus der ersten Stufe angeglichen werden.

Eine an sich bekannte Verfahrensvariante bei mehrstufiger Naßsiebung zeigt die Fig. 5. Darin wird der Rejekt 8" aus der letzten Stufe 6 in eine weitere Sortiervorrichtung 13 eingeführt. Die Gutstoff-Fraktion 15 dieser Sortiervorrichtung wird zurückgeführt und gelangt zusammen mit der Rejekt-Fraktion 8 der ersten Stufe in die Sortiervorrichtung 7" der letzten Stufe 6. Die Rejekt-Fraktion 14 der Sortiervorrichtung 13 wird aus dem System herausgeführt. Diese sogenannte Kaskadenschaltung führt zu einem Mehraufwand für die an sich lediglich zweistufige Naßsiebung. In speziellen Fällen kann sie aber Vorteile bieten.

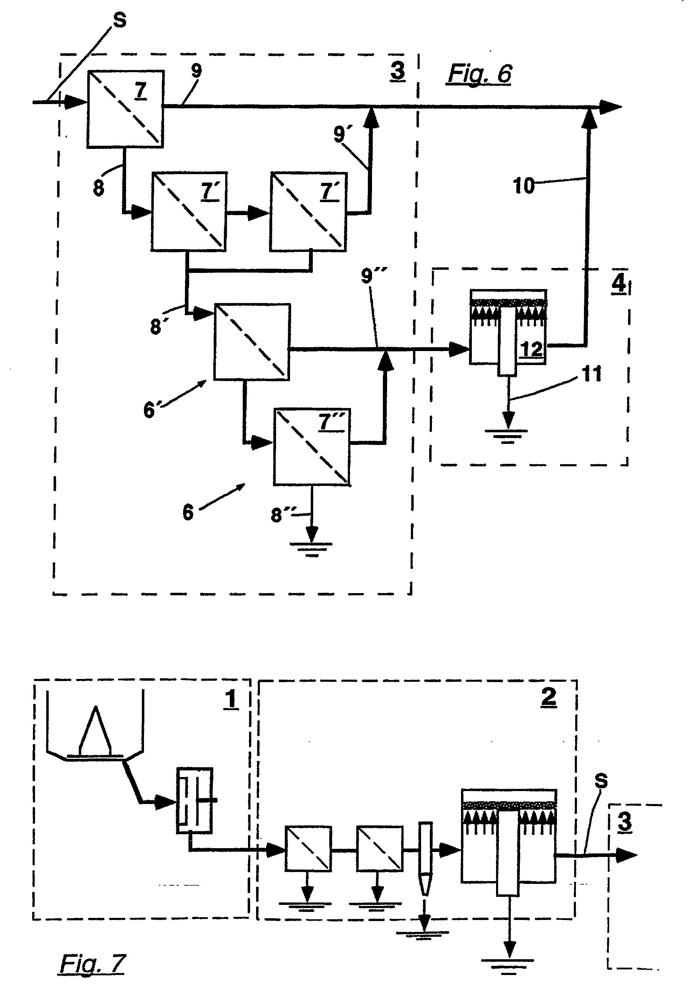

Es kann auch einen besonderen Vorteil bieten, wenn das Verfahren in der Weise variiert wird, daß die Gutstoff-Fraktionen 9" der letzten beiden Stufen 6'und 6 im Flotationsschritt 4 gereinigt werden. Einen solchen Fall zeigt die Fig. 6. Dabei können ähnliche Überlegungen eine Rolle spielen, wie im Zusammenhang mit der Fig. 3 genannt, nämlich daß die Gutstoff Fraktion auch der vorletzten Sortiervorrichtung bereits ein zu hohes Maß an Verunreinigungen enthält. Zudem kann die vorletzte Sortierstufe mit einem höheren Durchlaufanteil gefahren werden, da diese auch als Gutstoff-Fraktion noch gereinigt wird. Dadurch wird die letzte Sortiervorrichtung 7" kleiner oder sie kann noch effektiver betrieben werden.

Fig. 7 zeigt eine besondere Ausgestaltung der Vorreinigung 2. Demnach kann - wie bereits erwähnt - ein großer Teil der Farbpartikel, z.B. durch Flotation aus der Faserstoffsuspension herausgenommen werden. Dann führt das erfindungsgemäße Verfahren in vielen Fällen zu einer Verbesserung der Stoffqualität. Es hat sich nämlich gezeigt, daß der Flotationsschritt 4 besonders wirksam ist, wenn er ausschließlich auf solche Störstoffe abgestimmt werden kann, die zwar keine Druckfarben sind, aber prinzipiell flotierbar sind. Dabei handelt es sich zur Hauptsache um die klebenden und heißschmelzenden Störstoffe, also stickies, die - anders als die Druckfarben - oft mit weniger Chemikalien leichter entfernbar sind. Die spezielle Abstimmung auf stickies ist natürlich leicht möglich, wenn gar keine Druckfarben entfernt werden sollen, z.B. bei Rohstoffen für Verpackungspapiere.

Bekanntlich wird die Wirkung im Sortierverfahren wesentlich von der Stoffdichte und der Größe der Sieböffnungen beeinflußt. Es ist z.B. üblich, die Faserstoffsuspension in einer Aufbereitungsanlage z.B. mit Stoffdichten um 2 - 4 % und Lochsieben um ca. 2 mm zu sortieren und an anderen Stellen mit Schlitzen von einer Weite, die bei ca. 0,2 mm liegt und Stoffdichten unter 1 %. Für beide genannten Beispiele ist das erfindungsgemäße Verfahren anwendbar, wobei die Ergebnisse natürlich unterschiedlich sind. Auch bei Sortierern mit Schlitzen von ca. 0,2 mm Weite sind Stoffdichten um 2 - 3 % möglich. Das führt zu einem relativ großen Massendurchsatz bei guter Sortierqualität und daher zu optimalem technisch-wirtschaftlichen Betrieb. Da aber gerade bei solchen Bedingungen Probleme speziell mit klebenden Störstoffen (stickies) auftreten können, ist das erfindungsgemäße Verfahren hier besonders sinnvoll anzuwenden.

## Patentansprüche

1. Verfahren zur Entfernung von feinen Verunreinigungen aus einer Faserstoffsuspension (S), insbesondere einer Altpapier-Faserstoffsuspension, wobei der Faserstoff nach seiner Suspendierung in Wasser, der sogenannten Auflösung (1) und nach eventueller Vorreinigung (2) in einer mehrstufigen Naßsiebung (3) gereinigt wird, bei der mindestens zwei, vorzugsweise drei Siebvorrichtungen (7,7', 7'') so miteinander verbunden sind, daß die jeweils am Sieb abgewiesene Rejekt-Fraktion (8, 8') in die nachgeschaltete Siebvorrichtung (7', 7'') eingeführt wird, so lange, bis die letzte Stufe (6) der Naßsiebung (3) erreicht ist, bei der dann die Rejekt-Fraktion (8'') abgeführt wird,
**dadurch gekennzelchnet,**
daß mindestens eine Gutstoff-Fraktion (9', 9'') aus mindestens einer der ersten Stufe nachfolgenden Stufe durch mindestens einen Flotationsschritt (4) gereinigt wird, dessen Rejekt-Fraktion (11) einen großen Teil der Verunreinigungen und dessen Gutstoff-Fraktion (10) den weitaus überwiegenden Teil der Fasern enthält.

2. Verfahren nach Anspruch 1,
**dadurch gekennzeichnet,**
**daß** die Gutstoff-Fraktion (9', 9''), die den höchsten Anteil an flotierbaren Störstoffen aufweist, im Flotationsschritt (4) gereinigt wird.

3. Verfahren nach Anspruch 1 oder 2,
**dadurch gekennzeichnet,**
**daß** die Gutstoff-Fraktion (9'') der letzten Stufe (6) im Flotationsschritt (4) gereinigt wird.

4. Verfahren nach Anspruch 1, 2 oder 3,
**dadurch gekennzeichnet,**
**daß** die Gutstoff-Fraktionen (9'') der letzten beiden Stufen (6', 6) dem letzten Flotationsschritt (4) zugeführt werden.

5. Verfahren nach Anspruch 1, 2, 3 oder 4,
**dadurch gekennzeichnet,**
**daß** die Gutstoff-Fraktionen (9, 9'), die nicht im Flotationsschritt (4) gereinigt werden, zusammengefaßt und direkt zur Weiterverarbeitung (5) geleitet werden.

6. Verfahren nach Anspruch 5,
**dadurch gekennzeichnet,**
**daß** die Gutstoff-Fraktion (10) des Flotationsschrittes (4) den übrigen Gutstoff-Fraktionen zugeführt wird.

7. Verfahren nach einem der voranstehenden Ansprüche,
**dadurch gekennzeichnet,**
**daß** eine Vorreinigung (2) durchgeführt wird, in der auch Druckfarbenpartikel entfernt werden.

8. Verfahren nach einem der voranstehenden Ansprüche,
**dadurch gekennzeichnet,**
**daß** der Flotationsschritt (4) ohne Chemikalien durchgeführt wird, die speziell der Entfernung von Druckfarben dienen.

9. Verfahren nach einem der voranstehenden Ansprüche,
**dadurch gekennzeichnet,**
**daß** der Flotationsschritt (4) im wesentlichen ohne Flotationschemikalien durchgeführt wird.

10. Verfahren nach einem der voranstehenden Ansprüche,
**dadurch gekennzeichnet,**
**daß** als Siebvorrichtungen (7, 7', 7'') geschlossene Drucksortierer verwendet werden.

11. Verfahren nach Anspruch 10,
**dadurch gekennzeichnet,**
**daß** die Drucksortierer mit Sieben ausgestattet sind, deren freie Sieböffnungen Schlitze mit einer Schlitzweite zwischen 0,08 und 0,5 mm aufweisen.

12. Verfahren nach Anspruch 10,
**dadurch gekennzeichnet,**
**daß** die Drucksortierer mit Sieben ausgestattet sind, deren freie Sieböffnungen Löcher sind mit einem Durchmesser zwischen 0,8 und 3 mm.

13. Verfahren nach Anspruch 10, 11 oder 12,
**dadurch gekennzeichnet,**
**daß** der Trockengehalt der Faserstoffsuspension (S) in der ersten Stufe der Naßsiebung (3) auf einen Wert zwischen 0,6 und 2,5 % eingestellt wird.

14. Verfahren nach Anspruch 10, 11 oder 12,
**dadurch gekennzeichnet,**
**daß** der Trockengehalt der Faserstoffsuspension (S) in der ersten Stufe der Naßsiebung (3) auf einen Wert zwischen 2 und 4 % eingestellt wird.

15. Verfahren nach einem der voranstehenden Ansprüche,
**dadurch gekennzeichnet,**
**daß** der Flotationsschritt (4) in einer selektiv arbeitenden Flotationszelle (12) durchgeführt wird.

16. Verfahren nach einem der voranstehenden Ansprüche,
**dadurch gekennzeichnet,**
**daß** die zu reinigende Suspension (S) Kleberpartikel enthält.

17. Verfahren nach einem der voranstehenden Ansprüche,
**dadurch gekennzeichnet,**
**daß** die Suspension vor oder bei Durchführung des Flotationsschrittes (4) einer chemischen Behandlung unterzogen wird, bei der die Oberflächen-Aktivität von Störstoffen, insbesondere von Kleberpartikeln, erhöht wird.

18. Verfahren nach einem der voranstehenden Ansprüche,
**dadurch gekennzeichnet,**
**daß** der Faserstoff vor dem Flotationsschritt (4) dispergiert wird.

19. Verfahren nach einem der voranstehenden Ansprüche,
**dadurch gekennzeichnet,**
**daß** der Faserstoff vor der Naßsiebung (3) dispergiert wird.

20. Verfahren nach Anspruch 18 oder19,
**dadurch gekennzeichnet,**
**daß** bei der Dispergierung eine spezifische Arbeit von mindestens 20 kWh/t auf den Faserstoff übertragen wird.

## Claims

1. Process for removing fine contaminants from a fibre suspension (S), in particular a waste paper fibre suspension, wherein, after being suspended in water, the so-called repulping (1), and after possible precleaning (2), the fibrous material is cleaned in a multistage wet screening operation (3), in which at least two, preferably three screening devices (7, 7', 7") are connected together such that the reject fraction (8, 8') in each case rejected at the screen is introduced into the downstream screening device (7', 7") until the last stage (6) of the wet screening (3) is reached, in which the reject fraction (8") is then discharged,
**characterised in**
**that** at least one accepted fraction (9', 9") from at least one stage following the first stage is cleaned through at least one flotation step (4), the reject fraction (11) of which contains a large portion of the contaminants and the accepted fraction (10) of which contains by far the majority of the fibres.

2. Process according to Claim 1,
**characterised in**
**that** the accepted fraction (9', 9"), which contains the highest proportion of floatable interferents, is cleaned in the flotation step (4).

3. Process according to Claim 1 or 2,
**characterised in**
**that** the accepted fraction (9") of the last stage (6) is cleaned in the flotation step (4).

4. Process according to Claim 1, 2 or 3,
**characterised in**
**that** the accepted fractions (9") of the last two stages (6', 6) are delivered to the last flotation step (4).

5. Process according to Claim 1, 2, 3 or 4
**characterised in**
**that** the accepted fractions (9, 9') which are not cleaned in the flotation step (4) are combined and routed directly to the further processing stage (5).

6. Process according to Claim 5,
**characterised in**
**that** the accepted fraction (10) of the flotation step (4) is delivered to the other accepted fractions.

7. Process according to any one of the preceding Claims,
**characterised in**
**that** precleaning (2) in which printing ink particles are also removed is carried out.

8. Process according to any one of the preceding Claims,
**characterised in**
**that** the flotation step (4) is carried out without chemicals which serve especially to remove printing inks.

9. Process according to any one of the preceding Claims,
**characterised in**
**that** the flotation step (4) is carried out essentially without flotation chemicals.

10. Process according to any one of the preceding Claims,
**characterised in**
**that** closed pressure sorters are used as screening devices (7, 7', 7").

11. Process according to Claim 10,
**characterised in**
**that** the pressure sorters are equipped with screens whose free screen apertures comprise slots of a slot width of between 0.08 and 0.5 mm.

12. Process according to Claim 10,
**characterised in**
**that** the pressure sorters are equipped with screens whose free screen apertures are holes of a diameter of between 0.08 and 3 mm.

13. Process according to Claim 10, 11 or 12,
**characterised in**
**that** the dry content of the fibre suspension (S) in the first stage of the wet screening (3) is set to a value of between 0.6 and 2.5 %.

14. Process according to Claim 10, 11 or 12,
**characterised in**
**that** the dry content of the fibre suspension (S) in the first stage of the wet screening (3) is set to a value of between 2 and 4 %.

15. Process according to any one of the preceding Claims,
**characterised in**
**that** the flotation step (4) is carried out in a selectively operating flotation cell (12).

16. Process according to any one of the preceding Claims,
**characterised in**
**that** the suspension (S) which is to be cleaned contains adhesive particles.

17. Process according to any one of the preceding Claims,
**characterised in**
**that**, before or while carrying out the flotation step (4), the suspension is subjected to a chemical treatment in which the surface activity of interferents, in particular of adhesive particles, is increased.

18. Process according to any one of the preceding Claims,
**characterised in**
**that** the fibrous material is dispersed before the flotation step (4).

19. Process according to any one of the preceding Claims,
**characterised in**
**that** the fibrous material is dispersed before the wet screening (3).

20. Process according to Claim 18 or 19,
**characterised in**
**that** specific work of at least 20 kwh/t is transmitted to the fibrous material during dispersion.

## Revendications

1. Procédé pour éliminer de fines impuretés d'une suspension de matière fibreuse (S), en particulier d'une suspension d'une matière fibreuse de vieux papiers, après sa suspension dans l'eau, dite dissolution (1) et après pré-épuration (2) éventuelle, la matière fibreuse étant épurée au cours d'un tamisage par voie humide (3) à plusieurs étages, pour lequel au moins deux, de préférence trois dispositifs de tamisage (7, 7', 7") sont reliés entre eux de manière que la fraction de refus (8, 8'), refusée sur le tamis, soit introduite dans le dispositif de tamisage (7', 7") suivant, jusqu'à ce que le dernier étage (6) du tamisage par voie humide (3) soit atteint, dans lequel la fraction de refus (8") est évacuée, **caractérisé en ce qu'**au moins une fraction de la pâte acceptée (9', 9") provenant d'au moins un étage faisant suite au premier étage, est épurée par au moins une étape de flottation (4) dont la fraction de refus (11) contient une grande partie des impuretés et dont la fraction de pâte acceptée (10) contient la large majorité des fibres.

2. Procédé selon la revendication 1, **caractérisé en ce que** la fraction de pâte acceptée (9', 9") qui comporte la majeure partie de polluants pouvant être mis en flottation, est épurée au cours de l'étape de flottation (4).

3. Procédé selon la revendication 1 ou 2, **caractérisé en ce que** la fraction de pâte acceptée (9") du dernier étage (6) est épurée au cours de l'étape de flottation (4).

4. Procédé selon la revendication 1, 2 ou 3, **caractérisé en ce que** les fractions de pâte acceptée (9") des deux derniers étages (6', 6) sont envoyées à la dernière étape de flottation (4).

5. Procédé selon la revendication 1, 2, 3 ou 4, **caractérisé en ce que** les fractions de pâte acceptée (9, 9') qui ne sont pas épurées au cours de l'étape de flottation (4), sont réunies et acheminées directement vers le traitement complémentaire (5).

6. Procédé selon la revendication 5, **caractérisé en ce que** la fraction de pâte acceptée (10) de l'étape de flottation (4) est envoyée vers les autres fractions de pâte acceptée.

7. Procédé selon l'une des revendications précédentes, **caractérisé en ce qu'**une pré-épuration (2) est effectuée au cours de laquelle sont éliminées aussi les particules d'encre d'impression.

8. Procédé selon l'une des revendications précédentes, **caractérisé en ce que** l'étape de flottation (4) est conduite sans produits chimiques qui servent spécialement à éliminer les encres d'impression.

9. Procédé selon l'une des revendications précédentes, **caractérisé en ce que** l'étape de flottation (4) est conduite pour l'essentiel sans produits chimiques de flottation.

10. Procédé selon l'une des revendications précédentes, **caractérisé en ce qu'**on utilise comme dispositifs de tamisage (7, 7', 7") des épurateurs sous pression fermés.

11. Procédé selon la revendication 10, **caractérisé en ce que** les épurateurs sous pression sont équipés de tamis dont les ouvertures libres présentent des fentes d'une largeur comprise entre 0,08 et 0,5 mm.

12. Procédé selon la revendication 10, **caractérisé en ce que** les épurateurs sous pression sont équipés de tamis dont les ouvertures libres sont des trous d'un diamètre compris entre 0,8 et 3 mm.

13. Procédé selon la revendication 10, 11 ou 12, **caractérisé en ce que** la siccité de la suspension de matière fibreuse (S) dans le premier étage du tamisage par voie humide (3) est réglée sur une valeur comprise entre 0,6 et 2,5 %.

14. Procédé selon la revendication 10, 11 ou 12, **caractérisé en ce que** la siccité de la suspension de matière fibreuse (S) dans le premier étage du tamisage par voie humide (3) est réglée sur une valeur comprise entre 2 et 4 %.

15. Procédé selon l'une des revendications précédentes, **caractérisé en ce que** l'étape de flottation (4) est conduite dans une cellule de flottation (12) fonctionnant de manière sélective.

16. Procédé selon l'une des revendications précédentes, **caractérisé en ce que** la suspension (S) à épurer contient des particules de colle.

17. Procédé selon l'une des revendications précédentes, **caractérisé en ce que** la suspension est soumise, avant ou pendant l'exécution de l'étape de flottation (4), à un traitement chimique au cours duquel on accroît l'activité de surface des polluants, en particulier des particules de colle.

18. Procédé selon l'une des revendications précédentes, **caractérisé en ce que** la matière fibreuse est dispersée avant l'étape de flottation (4).

19. Procédé selon l'une des revendications précédentes, **caractérisé en ce que** la matière fibreuse est dispersée avant le tamisage par voie humide (3).

20. Procédé selon la revendication 18 ou 19, **caractérisé en ce que** pendant la dispersion, un travail spécifique d'au moins 20kWh/t est transféré à la matière fibreuse.
